# FASCICULE DE BREVET EUROPEEN

(11) **EP 0 662 206 B1**
(45) Date de publication et mention de la délivrance du brevet: **04.12.1996**
(21) Numéro de dépôt: 94922923.1
(22) Date de dépôt: 15.07.1994
(51) Int. Cl.: F16L 37/084, F16L 25/02

(54) **INSERT DE VERROUILLAGE ELECTRIQUEMENT ISOLANT POUR GARNITURE D'ETANCHEITE, GARNITURE D'ETANCHEITE CORRESPONDANTE, ET PROCEDE DE FABRICATION DE TELS INSERTS**
ELEKTRISCH ISOLIERENDER VERRIEGELEINSATZ FÜR ABDICHTUNG, ENTSPRECHENDE DICHTUNG UND VERFAHREN ZUR HERSTELLUNG DER EINSÄTZE
ELECTRICALLY INSULATING SEAL INSERT, CORRESPONDING SEAL AND METHOD FOR THE MANUFACTURE OF SUCH INSERTS

(30) Priorité: 23.07.1993 FR 9309133
(43) Date de publication de la demande: 12.07.1995
(73) Titulaire: PONT-A-MOUSSON S.A., 54000 Nancy (FR)
(72) Inventeur: PERCEBOIS, Alain, F-54700 Blenod-les-Pont-à-Mousson (FR); AUPROUX, Daniel, F-54570 Foug (FR); RENARD, Philippe, F-54500 Vandoeuvre-les-Nancy (FR)
(74) Mandataire: Puit, Thierry
(86) Numéro de dépôt international: FR9400885
(87) Numéro de publication internationale: WO9503507

(56) Documents cités:
- EP-A- 0 552 123
- DE-A- 2 754 984
- DE-A- 3 405 988
- FR-A- 2 679 622

## Description

La présente invention est relative aux joints verrouillés entre tuyaux métalliques, notamment en fonte à graphite sphéroïdal.

Les joints entre tuyaux sont soumis à des forces de séparation lorsque des fluides sous pression sont véhiculés.

Une manière particulièrement économique de verrouiller ces joints consiste à incorporer dans les garnitures d'étanchéité en élastomère ou autre matière souple une couronne d'inserts de verrouillage de forme générale plane, contenus dans des plans radiaux. Lorsque les joints tendent à se séparer, les inserts s'arc-boutent contre des surfaces d'appui appropriées et empêchent ainsi la séparation des tuyaux. Un exemple de cette technique est décrit dans la demande de brevet FR 2.679.622 de la Demanderesse.

Lorsque les tuyaux sont métalliques, il est parfois nécessaire, pour des raisons de sécurité, d'isoler électriquement les tuyaux les uns des autres. Or, les inserts, étant métalliques, forment des trajets conducteurs de l'électricité.

On a proposé de réaliser des inserts en des matériaux isolants, mais ceci s'est révélé conduire à des inserts coûteux et fragiles.

On a également proposé de revêtir les inserts métalliques d'une couche isolante, au moins dans une région d'appui de ces inserts. Cependant, de tels revêtements sont au contact d'une surface métallique relativement rugueuse, se déplacent en frottant sur cette surface et sont sollicités non seulement en compression, mais également en cisaillement. Par suite, ils sont vite détérioriés et éliminés.

L'invention a pour but de permettre d'assurer de façon économique une isolation électrique efficace et durable lors de l'utilisation de garnitures d'étanchéité comportant des inserts de verrouillage.

A cet effet, l'invention a pour objet un insert de verrouillage pour garniture d'étanchéité, de forme génerale plane, comprenant au moins deux pièces métalliques fixées l'une à l'autre par une couche de jonction électriquement isolante.

Un tel insert peut comporter une ou plusieurs des caractéristiques suivantes :
- la couche de jonction est à peu près perpendiculaire à l'axe de poussée de l'insert ;
- la couche de jonction s'étend à peu près suivant une section d'aire maximale de l'insert ;
- la couche de jonction est constituée d'une matière organique isolante et peu fluable, assurant simultanément la liaison et l'isolation électrique entre les deux pièces métalliques, ladite matière organique étant chargée ou non en particules de matériaux isolants non fluables ;
- la couche de jonction comprend un tissu, lit de fibres ou mat, dense et non fluable, notamment en matière minérale, relié de chaque côté à l'une des pièces métalliques par une couche de liaison en matière organique ;
- la couche de jonction comprend un revêtement isolant et non fluable, notamment en matière minérale, déposé sur l'une des pièces métalliques, et une couche de liaison notamment en matière organique reliant ce revêtement à l'autre pièce métallique ;
- la couche de jonction est constituée par une une matière de liaison isolante et non fluable, notamment par un matériau réfractaire tel que de l'émail, reliée directement aux surfaces en regard des deux pièces métalliques ;
les surfaces de jonction présentent en section, au moins dans une direction, un profil non rectiligne, notamment en U, en V ou sinueux ;
- les surfaces de jonction présentent un profil plan ou pseudo-plan, interrompu par des évidements en regard destinés à recevoir un organe isolant de positionnement relatif des pièces métalliques.

L'invention a également pour objets :
- une garniture d'étanchéité en matière souple dans laquelle est incorporé au moins un insert de verrouillage tel que défini ci-dessus ;
- un procédé de fabrication d'un insert tel que défini plus haut, ce procédé étant caractérisé en ce que :
- on réalise un mélange de particules de matière de liaison avec un agent agglomérant ;
- on réalise les pièces métalliques ;
- on dispose les pièces métalliques dans leur position relative désirée, avec entre elles une couche du mélange ; et
- on porte l'ensemble à une température adaptée pour réaliser à la fois la cuisson du mélange et un traitement thermique des pièces métalliques.

Dans un mode de mise en oeuvre, ledit mélange est une suspension aqueuse de poudre d'émail ou de verre, et ledit traitement thermique est un traitement thermique final de trempe.

Des exemples de réalisation de l'invention vont maintenant être décrits en regard des dessins annexés, sur lesquels :
- La figure 1 illustre, en coupe longitudinale. le verrouillage d'un joint entre deux tuyaux métalliques au moyen d'inserts conformes à l'invention ;
- la figure 2 représente en élévation une variante de l'insert de la figure 1 ;
- la figure 3 est une vue partielle prise en coupe suivant la ligne III-III de la figure 2 ;
- la figure 4 est une vue analogue à la figure 2, mais relative à une seconde variante d'insert ;
- la figure 5 est une vue partielle prise en coupe suivant la ligne V-V de la figure 4 ;
- la figure 6 est une vue analogue à la figure 2, mais relative à une troisième variante d'insert ;
- la figure 7 est une vue de dessus de l'une des deux pièces métalliques de l'insert de la figure 6 ;
- les figures 8 et 9 correspondent respectivement aux figures 6 et 7, mais pour une quatrième variante d'insert ; et
- les figures 10 et 11 correspondent respectivement aux figures 6 et 7, mais pour une cinquième variante d'insert.

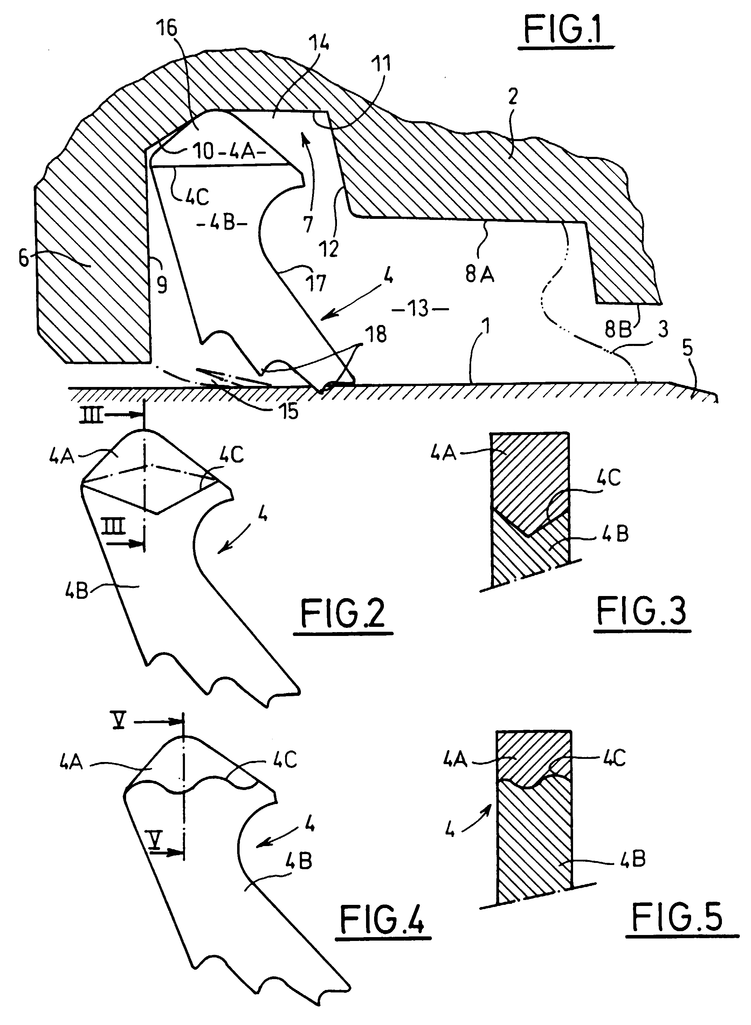

On a représenté schématiquement à la figure 1 un joint verrouillé entre deux tuyaux métalliques identiques, par exemple en fonte à graphite sphéroïdal, comportant à une extrémité un bout uni 1 et à l'extrémité opposée une emboîture 2. L'étanchéité du joint est obtenue automatiquement, lors de l'enfoncement du bout uni dans l'emboîture, par compression radiale d'une garniture annulaire d'étanchéité 3 (représentée uniquement par le contour de sa demi-section méridienne), et le verrouillage du joint est effectué par une couronne d'inserts 4 noyés dans cette garniture. Les éléments 1 à 3 ont un même axe général de révolution, supposé horizontal. Le bout uni présente une surface extérieure cylindrique, chanfreinée extérieurement en 5 à son extrémité.

Hormis la structure composite des inserts 4, qui sera décrite en détail plus loin, le joint peut, pour les besoins de la présente description, être considéré comme identique à celui décrit dans la demande de brevet FR-2.679.622 precitée. On ne rappelera donc que succintement les autres éléments du joint.

L'emboîture 2 comporte une collerette d'entrée 6, puis successivement, d'arrière vers l'avant, c'est-à-dire en allant de cette collerette vers le fond de l'emboîture : une gorge d'ancrage 7 relativement profonde, une cavité d'étanchéité 8A moins profonde, et une cavité avant 8B encore moins profonde, recevant librement l'extrémité du bout uni 1.

La gorge 7 est délimitée successivement par une paroi arrière 9 à peu près radiale, un pan incliné 10, un fond 11 et une paroi avant 12 à peu près radiale.

La garniture 3 est une pièce moulée en matériau souple ou résilient, par exemple en élastomère, qui comprend à l'avant un corps d'étanchéité massif 13 et, à l'arrière, un talon d'ancrage 14 en saillie radialement vers l'extérieur et une lèvre 15 en saillie radialement vers l'intérieur.

Chaque insert 4 est plat et présente un plan médian passant par l'axe du joint. Il présente la forme générale d'un L, avec une tête radialement extérieure 16 noyée dans le talon 14 de la garniture et une queue radialement intérieure 17 qui converge vers l'avant jusqu'à faire légèrement saillie sur la surface radialement intérieure de la garniture, à peu près à mi-longueur de celle-ci. La tête 16 a une forme générale rectangulaire, de même que la queue 17, et cette dernière se termine par une série de dents ou saillies 18

Pour monter le joint, on met en place la garniture dans l'emboîture, avec son talon dans la gorge 7, et on introduit le bout uni dans l'emboîture. Ceci replie la lèvre 15 et comprime radialement le corps de la garniture dans la cavité 8, et l'inclinaison vers l'avant de la queue 17 des inserts a pour conséquence que ces inserts ne s'opposent pas à la pénétration du bout uni.

Puis, en service, lorsque la canalisation est mise sous pression, le bout uni est sollicité vers l'arrière, c'est-à-dire tend à se déboîter. Les inserts 4 limitent ce recul en s'arc-boutant entre les surfaces 10 et/ou 11 de la gorge 7, contre lesquelles s'appuie la tête 16, et la surface extérieure du bout uni, dans laquelle mord au moins une dent 18. Le joint est ainsi verrouillé.

Chaque insert 4 est constitué de deux pièces en acier trempé, à savoir une pièce radialement extérieure 4A et une pièce radialement intérieure 4B, dont les surfaces de jonction en regard sont reliées par une couche de jonction électriquement isolante 4C.

La couche 4C est conçue de manière à subir des contraintes minimisées et s'exerçant le plus possible en compression, c'est-à-dire de manière à éviter le plus possible le cisaillement et/ou la traction, et de manière à maintenir une isolation électrique fiable entre les pièces 4A et 4B. Sa configuration doit bien entendu être telle que chacune des pièces 4A et 4B ne touche qu'un seul des deux tuyaux.

Ainsi, dans l'exemple de la figure 1, la couche 4C est contenue dans un plan à peu près perpendiculaire à l'axe de poussée de l'insert et coupe la tête 16 de l'insert suivant une section d'aire à peu près maximale de cette tête.

Dans un premier mode de réalisation, on part de deux pièces 4A, 4B ayant déjà subi un traitement thermique final approprié, comprenant une étape de chauffage et une étape de trempe.

La couche de jonction 4C peut alors présenter des compositions diverses :

Une première variante d'exécution consiste à réaliser cette couche 4C en matière organique isolante et peu fluable, chargée ou non en particules de matériaux isolants non fluables tels que par exemple des poudres minérales, notamment céramiques. Cette couche 4C, appliquée entre les surfaces de jonction des pièces 4A et 4B, assure alors simultanément la liaison et l'isolation électrique desdites pièces. Cette solution présente l'avantage d'être peu coûteuse et simple à mettre en oeuvre ; en effet, une telle couche 4C peut être réalisée à basse température et on ne risque ainsi pas de détremper l'acier constitutif des pièces 4A et 4B.

Une seconde manière de réaliser une couche de jonction satisfaisant de façon économique aux impératifs précités consiste à utiliser comme couche 4C un mat, lit de fibres ou tissu minéral, dense et non fluable, par exemple en fibres de verre ou de céramique, ce mat, lit de fibres ou tissu étant imprégné ou revêtu sur ses deux faces d'une matière organique telle que par exemple une résine. Cette solution présente l'avantage de ne pas entraîner de rupture de l'isolation électrique en cas de fluage de la résine organique, le mat, lit de fibres ou tissu restant alors interposé entre les surfaces de jonction des pièces 4A et 4B.

Dans une troisième variante, la couche 4C est réalisée en revêtant, notamment par projection ou évaporation, l'une des surfaces de jonction d'une couche d'un isolant minéral non fluable tel que du verre, une céramique ou de l'émail, puis en disposant une couche de liaison en matière organique, notamment époxydique, entre ce revêtement et l'autre surface de jonction. De cette manière, on limite le chauffage éventuel des pièces 4A et 4B à l'une des deux surfaces de jonction et à la zone adjacente de la même pièce. De plus, on réduit à un minimum la quantité d'isolant minéral déposé, ce qui est économique, et on garantit qu'un éventuel fluage, en service, de la matière organique, ne conduira pas à un contact métal/métal entre les deux pièces 4A, 4B.

Un autre procédé de fabrication des inserts selon l'invention consiste, dans un même cycle, à générer une couche 4C homogène possédant les propriétés désirées et à tremper les pièces 4A et 4B, ceci en procédant comme suit.

On réalise les deux pièces 4A et 4B par moulage ou usinage, et on prépare une suspension aqueuse épaisse de poudre d'émail ou de verre. On dispose ensuite les deux pièces en regard l'une de l'autre, en interposant de la suspension entre leurs surfaces de jonction. Puis on chauffe l'ensemble à une température convenant à la fois pour cuire la suspension et pour réaliser le traitement thermique de trempe de l'acier, sans dégrader la couche de liaison, cette température étant typiquement de l'ordre de 1000°C.

Pour l'ensemble des variantes qui viennent d'être décrites, il peut être avantageux de conformer les surfaces de jonction des deux pièces de manière que la couche 4C puisse reprendre essentiellement en compression des efforts s'écartant accidentellement de la direction d'arc-boutement ou de poussée théorique. En d'autres termes, on crée alors des obstacles au glissement des pièces 4A et 4B l'une par rapport à l'autre.

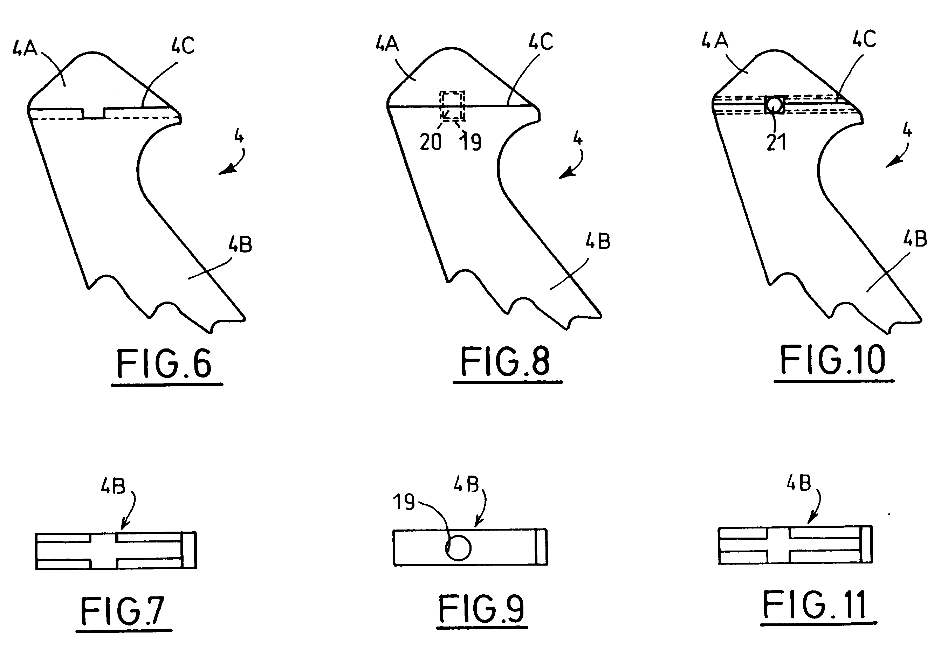

Ainsi, dans l'exemple des figures 2 et 3, la couche 4C a un profil en V (éventuellement inversé comme représenté en traits mixtes) tant latéralement (figure 2) qu'en bout (figure 3), c'est-à-dire présente une forme pyramidale. De même, dans l'exemple des figures 4 et 5, la couche 4C a un profil ondulé, tant latéralement (figure 4) qu'en bout (figure 5). Dans le cas des figures 6 et 7, les obstacles au glissement sont perpendiculaires au plan général de la couche 4C, et peuvent par exemple, comme représenté, être constitués par un relief en croix prévu sur une surface de jonction et par un évidement conjugué ménagé dans l'autre surface de jonction.

D'autre part, dans l'exemple des figures 8 et 9, chaque surface de jonction est plane (ou en variante pseudo-plane) et comprend un évidement cylindrique central 19, et un pion 20 en matériau isolant tel que par exemple un matériau minéral en verre, céramique ou fibre-ciment est reçu avec un faible jeu dans ces deux évidements. Le reste des surfaces de jonction est recouvert par la couche de jonction 4C, réalisée suivant l'une des variantes décrites plus haut. En variante, les cavités 19 pourraient avoir une autre forme, notamment hémisphérique, auquel cas le pion 20 serait remplacé par une bille.

Dans l'exemple des figures 10 et 11, chaque surface de jonction comporte un évidement en croix identique à l'évidement de la pièce 4B des figures 6 et 7. Pour empêcher le glissement relatif, on utilise des barres 21, par exemple cylindriques, ou bien un croisillon, réalisés en un matériau isolant et remplissant l'essentiel desdits évidements.

## Revendications

1. Insert de verrouillage (4) pour garniture d'étanchéité (3), de forme générale plane, comprenant au moins deux pièces métalliques (4A, 4B) fixées l'une à l'autre par une couche de jonction électriquement isolante (4C).

2. Insert suivant la revendication 1, caractérisé en ce que la couche de jonction (4C) est à peu près perpendiculaire à l'axe de poussée de l'insert.

3. Insert suivant la revendication 1 ou 2, caractérisé en ce que la couche de jonction (4C) s'étend à peu près suivant une section d'aire maximale de l'insert (4).

4. Insert suivant l'une quelconque des revendications 1 à 3, caractérisé en ce que la couche de jonction est constituée d'une matière organique isolante et peu fluable, assurant simultanément la liaison et l'isolation électrique entre les deux pièces métalliques, ladite matière organique étant chargée ou non en particules de matériaux isolants non fluables.

5. Insert suivant l'une quelconque des revendications 1 à 3, caractérisé en ce que la couche de jonction (4C) comprend un tissu, lit de fibres ou mat, dense et non fluable, notamment en matière minérale, relié de chaque côté à l'une des pièces métalliques (4A, 4B) par une couche de liaison en matière organique.

6. Insert suivant l'une quelconque des revendications 1 à 3, caractérisé en ce que la couche de jonction (4C) comprend un revêtement isolant et non fluable, notamment en matière minérale, déposé sur l'une des pièces métalliques, et une couche de liaison notamment en matière organique reliant ce revêtement à l'autre pièce métallique.

7. Insert selon l'une quelconque des revendications 1 à 3, caractérisé en ce que la couche de jonction (4C) est constituée par une matière de liaison isolante et non fluable, notamment en un matériau réfractaire tel que l'émail, reliée directement aux surfaces en regard des deux pièces métalliques (4A, 4B).

8. Insert suivant l'une quelconque des revendications 1 à 7, caractérisé en ce que les surfaces de jonction (4C) présentent en section, au moins dans une direction, un profil non rectiligne, notamment en U, en V ou sinueux.

9. Insert suivant l'une des revendications 1 à 7, caractérisé en ce que les surfaces de jonction présentent un profil plan ou pseudo-plan, interrompu par des évidements en regard (19) destinés à recevoir un organe isolant (20) de positionnement relatif des pièces métalliques (4A, 4B).

10. Garniture d'étanchéité (3) en matière souple dans laquelle est incorporé au moins un insert de verrouillage (4) suivant l'une quelconque des revendications 1 à 9.

11. Procédé de fabrication d'un insert de verrouillage (4) suivant la revendication 7, caractérisé en ce que :
- on réalise un mélange de particules de matière de liaison avec un agent agglomérant ;
- on réalise les pièces métalliques (4A, 4B), sans les soumettre à leur traitement thermique final de trempe ;
- on dispose les pièces métalliques dans leur position relative désirée, avec entre elles une couche du mélange ; et
- on porte l'ensemble à une température adaptée pour réaliser à la fois la cuisson du mélange et le traitement thermique final de trempe des pièces métalliques.

12. Procédé suivant la revendication 11, caractérisé en ce que ledit mélange est une suspension aqueuse de poudre d'émail ou de verre, et ledit traitement thermique est un traitement thermique final de trempe.

## Patentansprüche

1. Verriegelungseinsatz (4) für Abdichtungsgarnitur (3) allgemein ebener Form, der wenigstens zwei Metallstücke (4A, 4B) aufweist, die untereinander durch eine elektrisch isolierende Verbindungsschicht (4C) befestigt sind.

2. Einsatz nach dem Anspruch 1,
dadurch gekennzeichnet,
daß die Verbindungsschicht (4C) nahezu senkrecht zur Stoßachse des Einsatzes ist.

3. Einsatz nach dem Anspruch 1 oder 2,
dadurch gekennzeichnet,
daß sich die Verbindungsschicht (4C) nahezu längs einer maximalen Querschnittsfläche des Einsatzes (4) erstreckt.

4. Einsatz nach irgendeinem der Ansprüche 1 bis 3,
dadurch gekennzeichnet,
daß die Verbindungsschicht aus einem isolierenden und wenig fließfähigen organischen Stoff besteht, der gleichzeitig die Bindung und die elektrische Isolation zwischen den zwei Metallstücken sichert und mit Teilchen aus nichtfließfähigen isolierenden Materialien gefüllt oder nicht gefüllt ist.

5. Einsatz nach irgendeinem der Ansprüche 1 bis 3,
dadurch gekennzeichnet,
daß die Verbindungsschicht (4C) ein dichtes und nichtfließfähiges Gewebe, Faserbett oder Vlies, insbesondere aus mineralischem Stoff, aufweist, das an jeder Seite mit einem der Metallstücke (4A, 4B) durch eine Bindeschicht aus organischem Stoff verbunden ist.

6. Einsatz nach irgendeinem der Ansprüche 1 bis 3,
dadurch gekennzeichnet,
daß die Verbindungsschicht (4C) einen isolierenden und nichtfließfähigen Überzug, insbesondere aus mineralischem Stoff, der auf einem der Metallstücke abgeschieden ist, und eine Bindeschicht, insbesondere aus organischem Stoff, aufweist, die diesen Überzug mit dem anderen Metallstück verbindet.

7. Einsatz nach irgendeinem der Ansprüche 1 bis 3,
dadurch gekennzeichnet,
daß die Verbindungsschicht (4C) aus einem isolierenden und nichtfließfähigen Stoff, insbesondere aus einem feuerfesten Material wie Emaille, besteht, der direkt mit den zugewandten Oberflächen der zwei Metallstücke (4A, 4B) verbunden ist.

8. Einsatz nach irgendeinem der Ansprüche 1 bis 7,
dadurch gekennzeichnet,
daß die Verbindungsoberflächen (4C) im Schnitt, wenigstens in einer Richtung, ein nichtgeradliniges, insbesondere U-, V- oder Wellenprofil aufweisen.

9. Einsatz nach irgendeinem der Ansprüche 1 bis 7,
dadurch gekennzeichnet,
daß die Verbindungsoberflächen ein ebenes oder pseudoebenes Profil aufweisen, das durch einander zugewandte Ausnehmungen (19) unterbrochen ist, die zur Aufnahme eines Isolierorgans (20) zur Relativlageeinstellung der Metallstücke (4A, 4B) bestimmt sind.

10. Abdichtungsgarnitur (3) aus elastischem Material, in die wenigstens ein Verriegelungseinsatz (4) nach irgendeinem der Ansprüche 1 bis 9 eingebracht ist.

11. Verfahren zur Herstellung eines Verriegelungseinsatzes nach dem Anspruch 7,
dadurch gekennzeichnet, daß
- man ein Gemisch von Teilchen aus Bindestoff mit einem Agglomeriermittel herstellt;
- man die Metallstücke (4A, 4B) herstellt, ohne sie ihrer Endhärtungswärmebehandlung zu unterwerfen;
- man die Metallstücke in ihrer gewünschten Relativlage mit einer Schicht des Gemisches zwischen ihnen anordnet; und
- man das Ganze auf eine geeignete Temperatur bringt, um gleichzeitig das Einbrennen des Gemisches und die Endhärtungswärmebehandlung der Metallstücke zu bewirken.

12. Verfahren nach dem Anspruch 11,
dadurch gekennzeichnet,
daß das Gemisch eine wässerige Suspension von Emaille- oder Glaspulver ist und die Wärmebehandlung eine Endhärtungswärmebehandlung ist.

## Claims

1. Locking insert (4) for a seal (3), of generally plane shape, comprising at least two metal parts (4A, 4B) fixed to each other by means of an electrically insulating junction layer (4C).

2. Insert according to Claim 1, characterized in that the junction layer (4C) is approximately perpendicular to the thrust axis of the insert.

3. Insert according to Claim 1 or 2, characterized in that the junction layer (4C) extends approximately over a cross-section of maximum area of the insert (4).

4. Insert according to any one of Claims 1 to 3, characterized in that the junction layer consists of a low-creep insulating organic substance simultaneously ensuring the bonding of and the electrical insulation between the two metal parts, the said organic substance being unfilled or filled with particles of non-creeping insulating materials.

5. Insert according to any one of Claims 1 to 3, characterized in that the junction layer (4C) comprises a fabric, fibrous bed or mat, which is dense and non-creeping, especially made of an inorganic substance, connected on each side to one of the metal parts (4A, 4B) by means of a bonding layer made of an organic substance.

6. Insert according to any one of Claims 1 to 3, characterized in that the junction layer (4C) comprises a non-creeping insulating coating, especially made of an inorganic substance, deposited on one of the metal parts, and a bonding layer, especially made of an organic substance, connecting this coating to the other metal part.

7. Insert according to any one of Claims 1 to 3, characterized in that the junction layer (4C) consists of a non-creeping insulating bonding substance, especially of a refractory material such as enamel, connected directly to the facing surfaces of the two metal parts (4A, 4B).

8. Insert according to any one of Claims 1 to 7, characterized in that the junction surfaces (4C) have, in cross-section, at least in one direction, a non-rectilinear profile, especially a U-shaped, V-shaped or sinuous profile.

9. Insert according to one of Claims 1 to 7, characterized in that the junction surfaces have a plane or pseudo-plane profile interrupted by facing recesses (19) which are intended to house an insulating member (20) for the relative positioning of the metal parts (4A, 4B).

10. Seal (3) made of a flexible substance into which is incorporated at least one locking insert (4) according to any one of Claims 1 to 9.

11. Method of manufacturing a locking insert (4) according to Claim 7, characterized in that:
- a mixture of bonding-substance particles with an agglomerating agent is produced;
- the metal parts (4A, 4B) are produced without subjecting them to their final quench heat treatment;
- the metal parts are arranged in their desired relative positions, with a layer of the mixture between them; and
- the assembly is raised to a temperature suitable for carrying out both the firing of the mixture and the final quench heat treatment of the metal parts.

12. Method according to Claim 11, characterized in that the said mixture is an aqueous suspension of glass or enamel powder, and the said heat treatment is a final quench heat treatment.
